# FASCICULE DE BREVET EUROPEEN

(11) **EP 3 880 940 B1**
(45) Date de publication et mention de la délivrance du brevet: **26.07.2023**
(21) Numéro de dépôt: 19831779.4
(22) Date de dépôt: 14.11.2019
(51) Int. Cl.: F01D 25/16, F16C 27/04, F01D 21/04

(54) **DISPOSITIF POUR LE CENTRAGE ET LE GUIDAGE EN ROTATION D'UNE PIECE ROTATIVE AVEC BRAS ENTRELACES**
VORRICHTUNG ZUR ROTATIONSZENTRIERUNG UND -FÜHRUNG EINES ROTIERENDEN TEILS MIT VERSCHRÄNKTEN ARMEN
DEVICE FOR CENTRING AND GUIDING IN ROTATION A ROTATING PART WITH INTERLACED ARMS

(30) Priorité: 16.11.2018 FR 1860611
(43) Date de publication de la demande: 22.09.2021
(73) Titulaire: SAFRAN AIRCRAFT ENGINES, 75015 Paris (FR)
(72) Inventeur: SERVANT, Régis Eugène Henri, 77550 MOISSY-CRAMAYEL (FR); DESOMBRE, Didier Gabriel Bertrand, 77550 MOISSY-CRAMAYEL (FR)
(74) Mandataire: Regimbeau
(86) Numéro de dépôt international: PCT/FR2019/052699
(87) Numéro de publication internationale: WO 2020/099786

(56) Documents cités:
- EP-A1- 3 115 564
- EP-A2- 1 630 357
- FR-A1- 2 960 907
- US-A1- 2008 152 483

## Description

### DOMAINE TECHNIQUE GENERAL

La présente invention se rapporte au domaine des turbomachines, notamment pour aéronef, et concerne plus particulièrement un dispositif pour le centrage et le guidage en rotation d'une pièce rotative de turbomachine comprenant un palier de roulement, ledit palier comportant une partie souple élastique destinée à assurer sa suspension. Un tel palier est couramment appelé palier souple.

### ETAT DE LA TECHNIQUE

Un palier souple comprend une bride de fixation montée sur le support de palier et une partie souple reliant la bague extérieure du palier à la bride de fixation. La partie souple du palier souple, appelée généralement cage souple ou cage d'écureuil, est le plus souvent constituée d'une pluralité de bras usinés, ou colonnettes, situés entre la bride de fixation du palier sur le support de palier, et le palier proprement dit.

Le besoin de souplesse conditionne la longueur de ces bras. Plus les bras sont longs, plus le palier est souple, et plus les contraintes dans les bras sont faibles. Mais le palier devient alors encombrant axialement. La solution généralement retenue pour diminuer l'encombrement axial du palier, est d'installer des bras en forme de U, ce qui permet de diminuer environ de moitié l'encombrement axial de la partie souple. Cela est généralement fait sur un palier à rouleaux, qui ne transmet pas ou peu d'effort axial, et qui peut donc accepter qu'une partie des bras travaille en légère compression.

En outre, la demande de brevet EP3115564A1 propose, afin de réduire encore l'encombrement par rapport aux bras en forme de U, un décalage circonférentiel entre des parties des bras internes s'étendant axialement entre le palier de roulement et une base annulaire, et des parties de bras externes s'étendant axialement entre la bride de fixation et la base annulaire.

Toutefois, dans l'hypothèse de la survenue d'un évènement comme la perte d'une aube de soufflante, ou bien le grippage du palier par manque d'huile, des efforts très importants seraient générés sur le palier, qui pourraient entraîner la rupture de ces bras. Si aucune précaution particulière n'est prise, les bras rompus ne peuvent plus assurer le maintien en place de la bague du palier, que ce soit axialement ou tangentiellement. La fonction roulement n'est plus assurée, entrainant la dégradation rapide du palier et des pièces environnantes. Le palier ne peut plus assurer des phases de fonctionnement du moteur comme le fonctionnement en moulinet (ou "windmilling" en anglais).

Pour permettre d'assurer la retenue axiale de la bague extérieure du palier par rapport au support du palier même lorsque les éléments élastiquement déformables qui raccordent la bague extérieure du palier au support de palier sont rompus, différentes solutions ont été proposées.

Une solution connue consiste à interposer des moyens de rétention axiale de la bague extérieure entre le support de palier et une extrémité amont de la bague. Ces moyens de rétention axiale prennent la forme d'une pluralité de pattes radiales montées par boulons sur une extrémité amont du support de palier, et formant des butées axiales pour une extrémité amont de la bague extérieure. Cette solution technique est critiquable en ce qu'elle provoque un encombrement et une masse globale importante, notamment en raison de la nécessité d'étendre la bague extérieure de palier vers l'amont, afin d'offrir une surface de butée aux pattes radiales portées par le support de palier. Effectivement, cette extension de bague vers l'amont se justifie par le besoin pour celle-ci de s'étendre au-delà de la frette dans laquelle elle est logée, dans le but de recevoir les pattes radiales portées par le support de palier entourant la frette. Cette extension vers l'amont de la bague extérieure de palier s'avère parfois même impossible à réaliser, en raison de problèmes d'encombrement dans cette zone déjà très dense de la turbomachine.

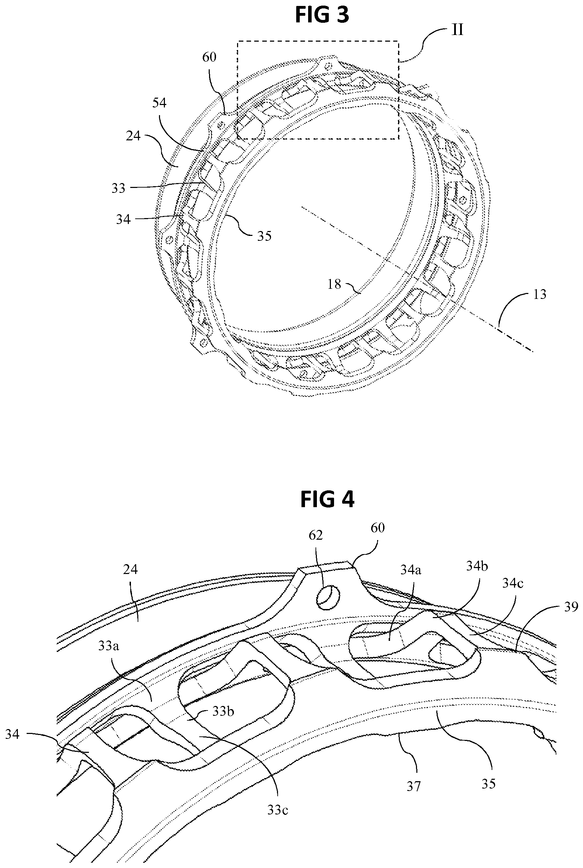

Une autre solution proposée dans le document FR 2960907 consiste à assurer la rétention axiale de la bague extérieure d'un palier au moyen de pions engagés conjointement dans une gorge de la bague extérieure et dans des orifices d'une extension aval de la frette du palier (voir par exemple la figure 3 du document précité). Toutefois, cette dernière solution requiert une procédure d'assemblage complexe. En effet, les pions doivent être montés selon la direction radiale allant de l'intérieur vers l'extérieur. Le montage des pions ne peut être réalisé qu'après avoir monté la bague extérieure du palier dans son support, et l'encombrement de ce dernier complique alors la tâche. De même, pour le démontage, il faut arracher les pions avant de pouvoir retirer la bague extérieure du palier de son support, ce qui présente un risque d'endommagement de ces éléments. Par ailleurs, pour rendre les pions imperdables, il faut pouvoir tourner la bague extérieure du palier dans son support, alors qu'elle est déjà dans sa position axiale finale. Une telle opération interdit un montage serré de la bague extérieure dans son support, qui est pourtant souhaitable.

La demande de brevet WO2015/079156 présente une autre solution, dans laquelle la fonction de rétention axiale du palier après rupture des bras est assurée dans les deux sens par des pions frettés dans le palier, qui coopèrent avec une bague d'arrêt elle aussi fretté sous la bride de fixation du palier. Néanmoins, le palier présente encore un encombrement radial important, ainsi qu'un poids non négligeable.

### PRESENTATION DE L'INVENTION

La présente invention a pour but de remédier aux inconvénients de l'état de la technique en proposant un dispositif pour le centrage et le guidage en rotation d'une pièce rotative selon un axe de turbomachine, comprenant :
- un palier de roulement comprenant une bague extérieure radialement à l'extérieur par rapport à l'axe ;
- un support de palier radialement à l'extérieur et entourant la bague extérieure;
- un ensemble annulaire de raccordement de la bague extérieure au support de palier, l'ensemble de raccordement comprenant une bride de fixation annulaire montée sur le support de palier et une partie souple reliant la bague extérieure à la bride de fixation, caractérisé en ce que la partie souple comprend :
- des premiers bras partant depuis la bride de fixation dans une première direction avec une première composante radiale vers l'intérieur en direction de l'axe ;
- des seconds bras partant depuis la bague extérieure du palier de roulement dans une seconde direction avec une seconde composante radiale opposée à la première composante radiale, vers l'extérieur ;
- une base annulaire que rejoignent les premiers bras et les seconds bras,

les premiers bras alternant circonférentiellement avec les seconds bras,
dans lequel les premiers bras font face dans une direction axiale à la bague extérieure du palier de roulement, et les seconds bras font face dans une direction axiale à la bride de fixation - des rattachements de seconds bras sur la base annulaire étant radialement plus extérieurs par rapport à l'axe que des rattachements de premiers bras sur la base annulaire.

Le dispositif est avantageusement complété par les caractéristiques suivantes, prises seules ou en une quelconque de leur combinaison techniquement possible :
- les premiers bras comprennent une première partie présentant une première interface de connexion liant lesdites premiers bras à la bride de fixation et s'étendant dans une direction radialement intérieure par rapport à l'axe face à la bague extérieure du palier de roulement, une deuxième partie coudée prolongeant la première partie, et une troisième partie prolongeant la deuxième partie et se rattachant à une partie radialement intérieure de la base annulaire ;
- les seconds bras comprennent une première partie présentant une première interface de connexion liant lesdites seconds bras à la bague extérieure du palier de roulement et s'étendant dans une direction radialement extérieure par rapport à l'axe face à la bride de fixation, une deuxième partie coudée prolongeant la première partie, et une troisième partie prolongeant la deuxième partie et se rattachant à une partie radialement intérieure de la base annulaire ;
- en décrivant la circonférence de l'ensemble annulaire, chaque premier bras est adjacent à deux seconds bras et chaque second bras est adjacent à deux premiers bras;
- la bride de fixation comprend un cadre annulaire pourvu de zones d'attache faisant saillie radialement vers l'extérieur par rapport à l'axe, les zones d'attache comportant des trous pour la fixation de la bride de fixation sur le support de palier ;
- un tube de servitude est disposé à l'extérieur du cadre annulaire entre les saillies de deux zones d'attache adjacentes ;
- le dispositif comprend une frette interposée entre la bague extérieure et le support de palier, et la bride de fixation comprend un cadre annulaire, ledit cadre annulaire formant butée axial de la frette dans la direction de l'axe.

L'invention concerne également une turbomachine comprenant au moins un dispositif selon l'invention.

L'invention concerne également un procédé de fabrication d'un dispositif l'invention, dans lequel la partie souple est fabriquée par fabrication additive.

### PRESENTATION DES FIGURES

L'invention sera mieux comprise, grâce à la description ci-après, qui se rapporte à un exemple de réalisation préféré, donné à titre d'exemple non limitatif et expliqué avec référence aux dessins schématiques annexés, dans lesquels :
- la Figure 1 est un schéma illustrant en section axiale un palier de roulement de turbomachine selon un mode de réalisation de l'invention ;
- la Figure 2 est une reprise de la Figure 1 après la rupture de bras de la partie souple du palier de roulement de turbomachine selon un mode de réalisation de l'invention ;
- la Figure 3 est un schéma illustrant une vue de l'ensemble annulaire de raccordement de la bague extérieure au support de palier selon un mode de réalisation de l'invention ;
- la Figure 4 est une vue à plus grande échelle du détail II de la Figure 3.

Sur les différentes figures, des références numériques identiques désignent des éléments similaires ou équivalents.

### DESCRIPTION DETAILLEE

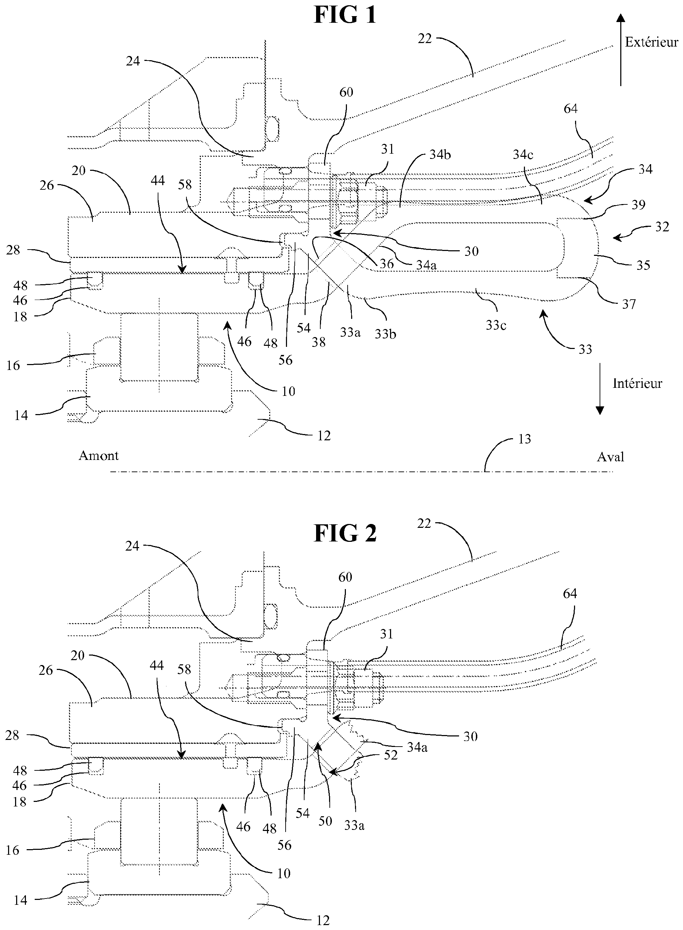

La Figure 1 illustre une partie d'un dispositif pour le centrage et le guidage en rotation d'une pièce rotative 12, tel qu'un arbre, dans une turbomachine, selon un premier mode de réalisation préféré de l'invention.

Dans la description qui suit, les directions « amont » et « aval » sont définies par rapport à un sens général d'écoulement des gaz parallèlement à un axe 13 de la pièce rotative 12 correspondant à un axe de la turbomachine. Ainsi, sur la Figure 1, la direction amont est dirigée vers la gauche de la Figure 1 et la direction aval est dirigée vers la droite de la Figure 1. De même, les directions radiales « vers l'intérieur » et « vers l'extérieur » sont définies par rapport à l'axe 13. Ainsi, sur la Figure 1, la direction radialement extérieure est dirigée vers le haut de la Figure 1 et la direction radialement intérieure est dirigée vers le bas de la Figure 1.

Ce dispositif 10 comprend un palier formé d'une bague intérieure 14 solidaire de la pièce rotative 12, un roulement 16, et une bague extérieure 18 solidaire d'un support de palier 20 de forme globalement annulaire.

Le support de palier 20 comporte une paroi tronconique 22 destinée à être raccordée à un carter de la turbomachine ou à un autre support de palier s'étendant coaxialement à la pièce rotative 12, une bride annulaire 24 s'étendant radialement vers l'intérieur depuis une extrémité amont de la paroi tronconique 22, et une partie amont 26 cylindrique de révolution s'étendant vers l'amont depuis une extrémité radialement interne de la bride annulaire 24. Le dispositif 10 comporte une frette 28 montée serrée dans la partie amont 26 du support de palier 20.

Dans cet exemple non limitatif, est illustré un palier amorti au moyen d'un film d'huile, également dénommé « squeeze film ». A cet effet, la bague extérieure 18 présente une surface annulaire radialement externe 44 de forme globalement cylindrique de révolution, et pourvue de deux gorges 46 dans lesquelles sont logés respectivement deux segments annulaires d'étanchéité 48 délimitant axialement un espace annulaire sur la surface annulaire radialement externe 44 destiné à recevoir un film d'huile.

Le dispositif 10 comporte en outre un ensemble de raccordement de la bague extérieure 18 au support de palier 20. Cet ensemble de raccordement comportent une bride de fixation 30 annulaire fixée, par exemple au moyen de boulons 31, sur la bride annulaire 24 du support de palier, et une partie souple 32, élastiquement déformable. La partie souple 32 comprend des bras 33, 34 espacés circonférentiellement les uns des autres, et une base annulaire 35 que rejoignent les premiers bras 33 et les seconds bras 34. La partie souple 32 s'étend ainsi globalement vers l'aval.

Plus précisément, la partie souple 32 comprend des premiers bras 33 partant depuis la bride de fixation 30 dans une première direction avec une première composante radiale vers l'intérieur en direction de l'axe 13, et s'étendant depuis la bride de fixation 30 jusqu'à la base annulaire 35. La partie souple comprend également des seconds bras 34 partant depuis la bague extérieure 18 du palier de roulement dans une seconde direction avec une seconde composante radiale opposée à la première composante radiale, vers l'extérieur par rapport à l'axe 13, et s'étendant jusqu'à la base annulaire 35.

Des rattachements de seconds bras 34 sur la base annulaire 35 sont radialement plus extérieurs par rapport à l'axe 13 que des rattachements de premiers bras 33 sur la base annulaire 35. De façon similaire, des rattachements de premiers bras 33 sur la base annulaire 35 sont radialement plus intérieurs par rapport à l'axe 13 que des rattachements de seconds bras 34 sur la base annulaire 35.

Or, la bague extérieure 18 du palier de roulement à partir de laquelle partent les premiers bras 33 est radialement plus intérieure (i.e. plus proche de l'axe 13) que le support 20 (et plus précisément la bride annulaire 24 de ce support 20) à partir duquel partent les seconds bras 34. Il en résulte que pour inverser leur ordonnancement radial, les premiers bras 33 croisent les seconds bras 34, comme visible sur la Figure 1. De ce fait, les premiers bras 33 font face à la bague extérieure 18 du palier de roulement, et les seconds bras 34 font face à la bride de fixation 30, dans la direction axiale.

Pour ce faire, les premiers bras 33 comprennent une première partie 33a présentant une première interface de connexion 36 liant lesdits premiers bras 33 à la bride de fixation 30 et s'étendant dans une direction radialement intérieure par rapport à l'axe 13, c'est-à-dire en direction de l'axe 13, et faisant face dans la direction axiale à la bague extérieure 18 du palier de roulement. Les premiers bras 33 comprennent également une deuxième partie 33b coudée prolongeant la première partie 33a, formant une inflexion pour la direction d'extension des premiers bras 33. Cette deuxième partie 33b fait de préférence face, dans la direction axiale, à la bague extérieure 18. Les premiers bras 33 comprennent enfin une troisième partie 33c prolongeant la deuxième partie 33b et se rattachant à une partie radialement intérieure 37 de la base annulaire 35. En comparaison avec la première partie 33a, cette troisième partie 33c s'étend dans une direction moins radialement intérieure par rapport à l'axe 13, en raison de l'aspect coudé de la deuxième partie 33b. De préférence, la troisième partie 33c s'étend dans une direction essentiellement axiale, comme sur la Figure 1, ou dans une direction radialement extérieure, à l'opposé de la direction de la première partie 33a.

Les seconds bras 34 comprennent une première partie 34a présentant une première interface de connexion 38 liant lesdites seconds bras à la bague extérieure 18 du palier de roulement et s'étendant dans une direction radialement extérieure par rapport à l'axe 13 en face de la bride de fixation 30. Les seconds bras 34 comprennent également une deuxième partie 34b coudée prolongeant la première partie 34a, formant une inflexion pour la direction d'extension des seconds bras 34. Cette deuxième partie 34b fait de préférence face, dans la direction axiale, au support 20. Les seconds bras 34 comprennent enfin une troisième partie 34c prolongeant la deuxième partie 34b et se rattachant à une partie radialement extérieure 39 de la base annulaire 35. En comparaison avec la première partie 34a, cette troisième partie 34c s'étend dans une direction moins radialement extérieure par rapport à l'axe 13, en raison de l'aspect coudé de la deuxième partie 34b. De préférence, la troisième partie 34c s'étend dans une direction essentiellement axiale, comme sur la Figure 1, ou dans une direction radialement intérieure, à l'opposé de la direction de la première partie 34a.

La forme des bras 33, 34 procure une grande longueur pour la suspension du palier de roulement sur le support de palier 20, supérieure à la longueur des bras en U de l'état de la technique pour le même encombrement. Grâce à cette longueur accrue, la souplesse de la suspension est augmentée et les contraintes sur les bras 33, 34 sont réduites. Il est également possible de réduire l'encombrement axial en conservant la souplesse requise.

Par ailleurs, les premiers bras 33 alternent avec les seconds bras 34 le long d'une circonférence de l'ensemble annulaire. De préférence, en décrivant la circonférence de l'ensemble annulaire, chaque premier bras 33 alterne avec un second bras 34, comme clairement visible sur la Figure 3. Il est toutefois possible de choisir une alternance moins régulière ou moins systématique. Par exemple, il est possible d'avoir des ensembles de deux premiers bras 33 adjacents espacés par un second bras 34. De préférence, il y a autant de premiers bras 33 que de second bras 34. De préférence également, chaque premier bras 33 est adjacent à deux des seconds bras 34 et chaque second bras 34 est adjacent à deux des premiers bras 33.

Cette alternance entre des premiers bras 33 et des seconds bras 34, qui forme donc un entrelacement de bras 33, 34, permet d'assurer la rétention axiale dans les deux sens et l'anti-rotation du palier de roulement même en cas de rupture de bras 33, 34. La Figure 2 montre un exemple de configuration dans lequel un premier bras 33 et un second bras 34 sont rompus. Seuls restent la première partie 33a du premier bras 33 et la première partie 34a du second bras 34.

Comme la première partie 34a du second bras 34 s'étend depuis la bague extérieure 18 dans une direction radialement vers l'extérieur, cette première partie 34a s'étend devant la bride de fixation 30, qui est solidaire du support 20. La bride de fixation 30 forme alors une surface de butée 50 vers l'avant pour la première partie 34a du second bras 34 afin d'empêcher un déplacement vers l'amont de la bague extérieure 18 sur laquelle est rattachée cette première partie 34a du second bras 34. Comme la première partie 33a du premier bras 33 s'étend depuis la bride de fixation 30 dans une direction radialement vers l'intérieur, cette première partie 33a s'étend devant la bague extérieure 18. La bague extérieure 18 forme alors une surface de butée 52 arrière pour la première partie 33a du premier bras 33, empêchant le déplacement de cette bague extérieure 18 vers l'aval.

Comme les bras 33, 34 empêchent le déplacement du palier de roulement, il n'est plus nécessaire de prévoir des dispositifs mécaniques annexes tels qu'une plaque de rétention axiale ou des pions de rétention frettés. Il est donc possible de réduire l'encombrement, notamment axial, ainsi que le poids du dispositif.

Il est également possible de réduire l'encombrement radial de la bride de fixation 30. Alors qu'antérieurement le centrage de la bride de fixation était placé face à la bride annulaire 24 du support de palier 20, laissant libre la partie amont 26 du support de palier 20, le centrage de la bride de fixation 30 est désormais placé radialement plus vers l'intérieur et fait maintenant face à cette partie amont 26 du support de palier 20. Le centrage du palier sur le support de palier 20 est ainsi réalisé à l'intérieur de la bride de fixation 30, et non plus à l'extérieur.

La bride de fixation 30 comprend un cadre annulaire 54 faisant face (dans la direction axiale) à la partie amont 26 et à la frette 28. C'est sur ce cadre annulaire 54 que se rattachent les interfaces de connexion 36 des premières parties 33a des premiers bras 33. Le cadre annulaire 54 forme une butée axiale de la frette 28 dans la direction de l'axe 13 et empêche le déplacement axial de la frette 28 montée dans le support de palier 20 en cas de perte accidentelle de serrage entre la frette 28 et le support de palier 20. De préférence, et comme visible sur les Figure 1 et 2, le cadre annulaire présente une nervure 56 faisant saillie dans la direction axiale amont et s'engageant dans un espace 58 délimité entre la partie amont 26 du support 20 et la frette 28.

Le centrage du palier sur le support de palier 20 à l'intérieur de la bride de fixation 30 permet de festonner la bride de fixation 30 entre les points de fixation, c'est-à-dire d'y ménager des festons entre les zones d'attaches 60 qui font désormais saillie vers l'extérieur par rapport au cadre annulaire 54, comme illustré sur les Figures 3 et 4. Le cadre annulaire 54 est donc pourvu de zones d'attache 60 faisant saillie radialement vers l'extérieur par rapport à l'axe 13, les zones d'attache 60 comportant des trous 62 pour la fixation de la bride de fixation 30 sur le support de palier 20, et en particulier pour le passage de boulons 31. De préférence, la bride de fixation 30 comprend plus de trois zones d'attache 60, et de préférence ces zones d'attache 60 sont réparties régulièrement sur la circonférence de la bride de fixation 30.

Ainsi que visible sur la Figure 4, une zone d'attache 60 fait saillie au niveau d'un premier bras 33 et entre deux seconds bras 34, vu dans la direction de l'axe 13. Plus précisément, une zone d'attache 60 fait saillie au droit (vers l'extérieur) d'un premier bras 33 puisque celui-ci laisse l'espace aval dégagé pour le passage du boulon 31 dans le trou 62 de la zone d'attache 60, en raison du fait que le premier bras 33 part depuis la bride de fixation 30 dans une direction avec une première composante radiale vers l'intérieur en direction de l'axe 13. De même, cette configuration du premier bras 33 laisse un espace suffisant pour le passage d'un outil de fixation du boulon 31.

Grâce au festonnage de la bride de fixation 30, les servitudes n'ont plus besoin de traverser la bride de fixation 30, et il n'y a plus besoin d'y ménager des trous à cet effet. Les servitudes prennent ici la forme d'un tube 64 disposé à l'extérieur du cadre annulaire 54 entre les saillies de deux zones d'attache 60 adjacentes.

Par rapport à l'état de la technique, le diamètre réduit de la bride de fixation 30 (en raison de sa disposition plus près de l'axe 13), le festonnage de la bride de fixation 30, et l'absence de plaque de rétention axiale ou de pions de rétention frettés, permettent de réduire de plus d'un kilogramme le poids du dispositif.

De préférence, les différents composants de la partie souple, c'est-à-dire la base annulaire 35, les premiers bras 33 et les seconds bras 34, sont venus de matière, étant formée du même matériau. Préférentiellement, ce matériau est un acier à roulement.

De préférence, la partie souple 32 est fabriquée par fabrication additive, par ajout de matière, et notamment par empilement de couches successives, comme dans le cas d'une impression tridimensionnelle. Tout type de fabrication additive permettant d'obtenir un matériau souple élastiquement déformable adapté pour répondre aux exigences de la fonction remplie par la partie souple. La fabrication de la partie souple 32 peut comprendre l'assemblage de sous-partie fabriquée par fabrication additive, chaque sous-partie comprenant au moins un premier bras 33 et au moins un second bras 34. La fabrication additive permet de réduire la hauteur radiale de la partie souple 32 par rapport à l'état de la technique car cette hauteur radiale n'est plus conditionnée par un besoin d'accessibilité pour un outil d'usinage de l'espace interne en U des parties souples telles que décrites par exemple dans la demande WO 2015/079156.

L'invention n'est pas limitée au mode de réalisation décrit et représenté aux figures annexées. Des modifications restent possibles, notamment du point de vue de la constitution des divers éléments, sans sortir pour autant du domaine de protection de l'invention telle que définit dans les revendications suivantes.

## Revendications

1. Dispositif (10) pour le centrage et le guidage en rotation d'une pièce rotative (12) selon un axe (13) de turbomachine, comprenant
- un palier de roulement comprenant une bague extérieure (18) radialement à l'extérieur par rapport à l'axe (13) ;
- un support de palier (20, 24, 26) radialement à l'extérieur et entourant la bague extérieure (18);
- un ensemble annulaire de raccordement de la bague extérieure au support de palier, l'ensemble de raccordement comprenant une bride de fixation (30) annulaire montée sur le support de palier et une partie souple (32) reliant la bague extérieure à la bride de fixation (30),
la partie souple (32) comprenant :
- des premiers bras (33) partant depuis la bride de fixation (30) dans une première direction avec une première composante radiale vers l'intérieur en direction de l'axe (13) ;
- des seconds bras (34) partant depuis la bague extérieure (18) du palier de roulement dans une seconde direction avec une seconde composante radiale opposée à la première composante radiale, vers l'extérieur ;
- une base annulaire (35) que rejoignent les premiers bras (33) et les seconds bras (34),
les premiers bras (33) alternant circonférentiellement avec les seconds bras (34), les premiers bras (33) font face dans une direction axiale à la bague extérieure (18) du palier de roulement, et les seconds bras (34) font face dans une direction axiale à la bride de fixation (30), **caractérisé en ce que** des rattachements (39) de seconds bras (34) sur la base annulaire (35) sont radialement plus extérieurs par rapport à l'axe (13) que des rattachements (37) de premiers bras (33) sur la base annulaire (35).

2. Dispositif selon la revendication 1, dans lequel les premiers bras (33) comprennent une première partie (33a) présentant une première interface de connexion (36) liant lesdites premiers bras à la bride de fixation (30) et s'étendant dans une direction radialement intérieure par rapport à l'axe (13) face à la bague extérieure (18) du palier de roulement, une deuxième partie (33b) coudée prolongeant la première partie (33a), et une troisième partie (33c) prolongeant la deuxième partie (33b) et se rattachant à une partie radialement intérieure (37) de la base annulaire (35).

3. Dispositif selon l'une des revendications 1 à 2, dans lequel les seconds bras (34) comprennent une première partie (34a) présentant une première interface de connexion (38) liant lesdites seconds bras à la bague extérieure (18) du palier de roulement et s'étendant dans une direction radialement extérieure par rapport à l'axe (13) face à la bride de fixation (30), une deuxième partie (34b) coudée prolongeant la première partie (34a), et une troisième partie (34c) prolongeant la deuxième partie (34b) et se rattachant à une partie radialement intérieure (39) de la base annulaire (35).

4. Dispositif selon l'une des revendications 1 à 3, dans lequel en décrivant la circonférence de l'ensemble annulaire, chaque premier bras (33) est adjacent à deux des seconds bras (34) et chaque second bras (34) est adjacent à deux des premiers bras (33).

5. Dispositif selon l'une des revendications 1 à 4, dans lequel la bride de fixation (30) comprend un cadre annulaire (54) pourvu de zones d'attache (60) faisant saillie radialement vers l'extérieur par rapport à l'axe (13), les zones d'attache (60) comportant des trous (62) pour la fixation de la bride de fixation (30) sur le support de palier (20).

6. Dispositif selon la revendication 5, dans lequel un tube de servitude (64) est disposé à l'extérieur du cadre annulaire (54) entre les saillies de deux zones d'attache (60) adjacentes.

7. Dispositif selon l'une des revendications 1 à 6, comprenant une frette (28) interposée entre la bague extérieure (18) et le support de palier (20), et la bride de fixation (30) comprend un cadre annulaire (54), ledit cadre annulaire formant butée axiale de la frette dans la direction de l'axe (13).

8. Turbomachine comprenant un dispositif selon l'une quelconque des revendications 1 à 7.

9. Procédé de fabrication d'un dispositif selon l'une quelconque des revendications 1 à 7, dans lequel la partie souple (32) est fabriquée par fabrication additive.

## Patentansprüche

1. Vorrichtung (10) zum Zentrieren und Drehführen eines rotierenden Teils (12) entlang einer Achse (13) einer Turbomaschine, umfassend:
- ein Wälzlager, das einen äußeren Laufring (18) umfasst, der in Bezug auf die Achse (13) radial außen liegt;
- eine Lagerhalterung (20, 24, 26), die radial außen liegt und den äußeren Laufring (18) umgibt;
- eine ringförmige Anordnung zum Verbinden des äußeren Laufrings mit der Lagerhalterung, wobei die Verbindungsanordnung einen ringförmigen Befestigungsflansch (30), der an der Lagerhalterung montiert ist, und ein flexibles Teil (32) umfasst, das den äußeren Laufring mit dem Befestigungsflansch (30) verbindet,
wobei das flexible Teil (32) Folgendes umfasst:
- erste Arme (33), die vom Befestigungsflansch (30) in einer ersten Richtung mit einer ersten radialen Komponente nach innen zur Achse (13) verlaufen;
- zweite Arme (34), die vom äußeren Laufring (18) des Wälzlagers in einer zweiten Richtung mit einer zweiten radialen Komponente entgegengesetzt zur ersten radialen Komponente nach außen verlaufen;
- eine ringförmige Basis (35), an der die ersten Arme (33) und die zweiten Arme (34) zusammenkommen,
wobei sich die ersten Arme (33) in Umfangsrichtung mit den zweiten Armen (34) abwechseln, die ersten Arme (33) in axialer Richtung dem äußeren Laufring (18) des Wälzlagers zugewandt sind und die zweiten Arme (34) in axialer Richtung dem Befestigungsflansch (30) zugewandt sind, **dadurch gekennzeichnet, dass** Befestigungsteile (39) der zweiten Arme (34) an der ringförmigen Basis (35) radial weiter außen in Bezug auf die Achse (13) liegen als Befestigungsteile (37) der ersten Arme (33) an der ringförmigen Basis (35).

2. Vorrichtung nach Anspruch 1, bei der die ersten Arme (33) ein erstes Teil (33a), das eine erste Verbindungsschnittstelle (36) aufweist, die die ersten Arme mit dem Befestigungsflansch (30) verbindet und sich in einer Richtung radial nach innen in Bezug auf die Achse (13) gegenüber dem äußeren Laufring (18) des Wälzlagers erstreckt, ein zweites gebogenes Teil (33b), das das erste Teil (33a) verlängert, und ein drittes Teil (33c) umfassen, das das zweite Teil (33b) verlängert und an ein radial inneres Teil (37) der ringförmigen Basis (35) befestigt ist.

3. Vorrichtung nach einem der Ansprüche 1 bis 2, bei der die zweiten Arme (34) ein erstes Teil (34a), das eine erste Verbindungsschnittstelle (38) aufweist, die die zweiten Arme mit dem äußeren Laufring (18) des Wälzlagers verbindet und sich in einer Richtung radial außen in Bezug auf die Achse (13), die dem Befestigungsflansch (30) zugewandt ist, erstreckt, ein zweites gebogenes Teil (34b), das das erste Teil (34a) verlängert, und ein drittes Teil (34c) umfassen, das das zweite Teil (34b) verlängert und an ein radial inneres Teil (39) der ringförmigen Basis (35) befestigt ist.

4. Vorrichtung nach einem der Ansprüche 1 bis 3, bei der beim Beschreiben des Umfangs der ringförmigen Anordnung jeder erste Arm (33) an zwei der zweiten Arme (34) angrenzt und jeder zweite Arm (34) an zwei der ersten Arme (33) angrenzt.

5. Vorrichtung nach einem der Ansprüche 1 bis 4, bei der der Befestigungsflansch (30) einen ringförmigen Rahmen (54) umfasst, der mit in Bezug auf die Achse (13) radial nach außen vorstehenden Befestigungszonen (60) versehen ist, wobei die Befestigungszonen (60) Löcher (62) zur Befestigung des Befestigungsflansches (30) an der Lagerhalterung (20) aufweist.

6. Vorrichtung nach Anspruch 5, bei der ein Funktionsrohr (64) außerhalb des ringförmigen Rahmens (54) zwischen den Vorsprüngen zweier angrenzender Befestigungszonen (60) angeordnet ist.

7. Vorrichtung nach einem der Ansprüche 1 bis 6, umfassend einen Schrumpfring (28), der zwischen dem äußeren Laufring (18) und der Lagerhalterung (20) angeordnet ist, und wobei der Befestigungsflansch (30) einen ringförmigen Rahmen (54) umfasst, wobei der ringförmige Rahmen einen axialen Anschlag des Schrumpfrings in Richtung der Achse (13) bildet.

8. Turbomaschine, umfassend eine Vorrichtung nach einem der Ansprüche 1 bis 7.

9. Verfahren zum Herstellen einer Vorrichtung nach einem der Ansprüche 1 bis 7, bei dem das flexible Teil (32) durch additive Fertigung hergestellt wird.

## Claims

1. Device (10) for centering and guiding in rotation a rotating part (12) along an axis (13) of a turbomachine, comprising
- a rolling bearing comprising an outer ring (18) radially outwards with respect to the axis (13);
- a bearing support (20, 24, 26) radially outside and surrounding the outer ring (18);
- an annular assembly for connecting the outer ring to the bearing support, the connection assembly comprising an annular mounting flange (30) mounted on the bearing support and a flexible portion (32) connecting the outer ring to the mounting flange (30), the flexible portion (32) comprising :
- first arms (33) extending from the attachment flange (30) in a first direction with a first radial component inward toward the axis (13);
- second arms (34) extending from the outer ring (18) of the bearing in a second direction with a second radial component opposite to the first radial component, towards the outside;
- an annular base (35) that is joined by the first arms (33) and the second arms (34) the first arms (33) alternating circumferentially with the second arms (34),
the first arms (33) face in an axial direction the outer ring (18) of the rolling bearing, and the second arms (34) face in an axial direction the mounting flange (30), **characterized in that** attachments (39) of second arms (34) to the annular base (35) are radially more outward with respect to the axis (13) than attachments (37) of first arms (33) to the annular base (35).

2. The device according to claim 1, wherein the first arms (33) comprise a first portion (33a) having a first connection interface (36) connecting said first arms to the attachment flange (30) and extending in a radially inner direction with respect to the axis (13) facing the outer ring (18) of the bearing a second angled portion (33b) extending the first portion (33a), and a third portion (33c) extending the second portion (33b) and connecting to a radially inner portion (37) of the annular base (35).

3. A device according to any of claims 1 to 2, wherein the second arms (34) comprise a first portion (34a) having a first connection interface (38) connecting said second arms to the outer ring (18) of the rolling bearing and extending in a radially outward direction with respect to the axis (13) facing the attachment flange (30), a second angled portion (34b) extending the first portion (34a), and a third portion (34c) extending the second portion (34b) and connecting to a radially inner portion (39) of the annular base (35).

4. The device according to any of claims 1 to 3, wherein in describing the circumference of the ring assembly, each first arm (33) is adjacent to two of the second arms (34) and each second arm (34) is adjacent to two of the first arms (33).

5. The device according to any of claims 1 to 4, wherein the fastening flange (30) comprises an annular frame (54) provided with attachment areas (60) projecting radially outwardly from the axis (13), the attachment areas (60) having holes (62) for fastening the fastening flange (30) to the bearing support (20).

6. The device according to claim 5, wherein a utility tube (64) is disposed outside the annular frame (54) between the projections of two adjacent attachment areas (60).

7. The device according to any of claims 1 to 6, comprising a band (28) interposed between the outer ring (18) and the bearing support (20), and the fastening flange (30) comprises an annular frame (54), said annular frame forming an axial stop of the band in the direction of the axis (13).

8. A turbomachine comprising a device according to any one of claims 1 to 7.

9. A method of manufacturing a device according to any of claims 1 to 7, wherein the flexible portion (32) is manufactured by additive manufacturing.
